Europäisches Patentamt

(19) European Patent Office

Office européen des brevets

(11) Publication number: **0 324 553 B1**

(12) # EUROPEAN PATENT SPECIFICATION

(45) Date of publication of patent specification :
03.07.91 Bulletin 91/27

(51) Int. Cl.⁵ : **F16D 25/14**

(21) Application number : **89300118.0**

(22) Date of filing : **06.01.89**

(54) Clutch actuator system for automatic/semi-automatic mechanical transmission system.

(30) Priority : **13.01.88 GB 8800741**

(43) Date of publication of application :
**19.07.89 Bulletin 89/29**

(45) Publication of the grant of the patent :
**03.07.91 Bulletin 91/27**

(84) Designated Contracting States :
**DE ES FR GB IT SE**

(56) References cited :
**EP-A- 0 158 004
EP-A- 0 231 465
EP-A- 0 239 471
DE-A- 3 010 503
DE-A- 3 246 362**

(73) Proprietor : **EATON CORPORATION
Eaton Center, 1111 Superior Avenue
Cleveland Ohio 44114 (US)**

(72) Inventor : **Cottam, Michael John
54 Glen Park Drive Hesketh Bank
Near Preston Lancs PR4 6TA (GB)**
Inventor : **Nellums, Richard Alexander
46 Long Copse
Chorley Lancs. PR7 1TH (GB)**

(74) Representative : **Douglas, John Andrew
Eaton House Staines Road
Hounslow Middlesex TW4 5DX (GB)**

EP 0 324 553 B1

# Description

## BACKGROUND OF THE INVENTION

### Field of the Invention

The present invention relates to a clutch actuator system for use in automatic/semi-automatic mechanical transmission systems (AMT/SAMT). In particular, the present invention relates to a clutch actuation system for AMT/SAMT use which utilizes the standard components of the clutch actuation system normally provided (usually by the vehicle assembler) for manually operated master clutches.

### The Prior Art

Automatic mechanical transmission systems (AMTs) and semi-automatic mechanical transmission systems (SAMTs) are known in the prior art as may be seen by reference to United States Patent Nos. 4,361,060 ; 4,527,447 and 4,648,290, the disclosures of which are hereby incorporated by reference. The prior art systems utilized an engagable and disengagable master friction clutch drivingly interposed the vehicle engine and the transmission gearing. Control means, usually microprocessor based, are utilized to provide command output signals to actuators to automatically operate the clutch and transmission based upon sensed inputs and predetermined logic rules. The systems could be "two-pedal" systems with only automatic clutch actuation or "three-pedal" systems having manual as well as automatic clutch actuation for start-from-stop and/or other modes of operation.

In the prior art systems, the AMT/SAMT systems utilized fully integrated clutch actuation systems which utilized little or none of the actuation/assist mechanisms normally provided by the vehicle manufacturers for manual transmission systems. This may require the vehicle manufacturer to utilize and/or design-in components with which he is not familiar.

EP-A-0 231 465 discloses the pre-characterizing part of Claim 1.

In accordance with the present invention, the drawbacks of the prior art have been minimized by the provision of an AMT/SAMT clutch actuator system utilizing many of the master clutch control components typically provided, and engineered into, vehicles having a manual transmission system.

The above is accomplished by utilizing the standard clutch actuator, reservoir, assist mechanism and/or standard master-cylinder and inserting an additional automatically controlled actuator in the control circuit.

DE-A-3 246 362 shows a manual controlled clutch with manual override of an automatic actuation responsive to an engine braking sensing ; it discloses no automatic transmission. In contrast, the present invention never allows manual override of an automatic control of a clutch (by the central control which actuates a transmission).

## BRIEF DESCRIPTION OF THE DRAWINGS

Figure 1 is a schematic illustration of a prior art semi-automatic mechanical transmission system.

Figure 2 is a schematic illustration of the clutch actuation system of the present invention.

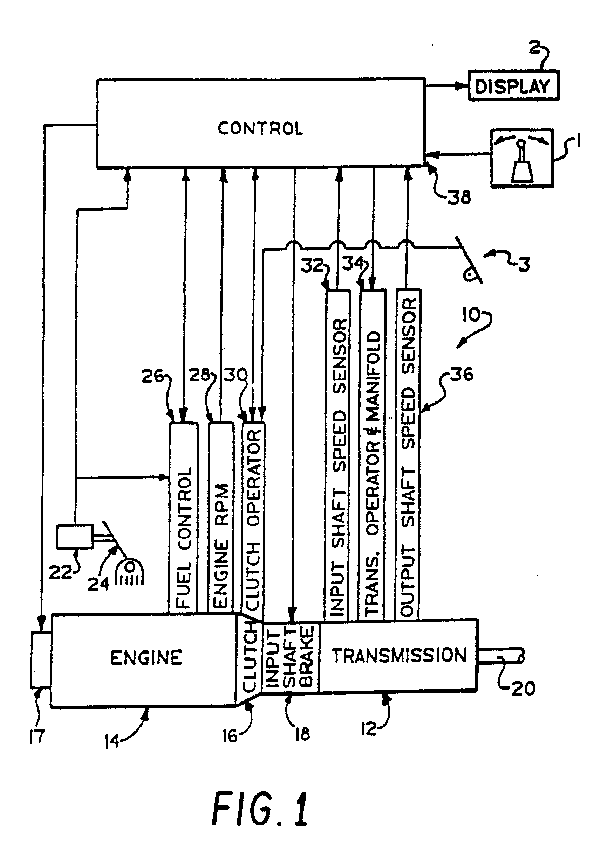

Figure 1 illustrates an AMT/SAMT system 10 of the "three pedal" type having a throttle pedal 24, a brake pedal (not illustrated) and a clutch pedal 3. It is understood that the present invention is also applicable to "two-pedal" type system having only a throttle pedal and a brake pedal. Transmission systems of the type illustrated in Figure 1 may be appreciated in greater detail by reference to above-mentioned US Patent No. 4,648 290.

Referring to Figure 1, the position of a driver-operated throttle 24 is sensed at sensor 22 and fed to a central processing unit 38, which also receives inputs relative to engine speed from sensor 28 and/or transmission input shaft speed from sensor 32, from transmission output shaft speed from sensor 36, and from positive or negative actuations of the driver's gear shift lever, or "joy stick" 1. It is understood that engine speed is an indication of transmission input shaft speed, and visa versa, especially if clutch 16 is nonslippingly engaged.

Control logic circuits, sensors and actuators for the transmission system 10 as disclosed in Figure 1 may be as disclosed in U.S. Patent No. 4,361,060, the disclosure of which is hereby incorporated by reference. Specifically, central processing unit 38 receives inputs, processes same in accordance with predetermined logic rules and provides command output signals to pneumatic and/or electrical actuators for control of an exhaust brake 17 and/or an input shaft brake 18 for rapid upshifts, and automatic fuel control 26 to "blip" the supply of fuel to the engine 14 to achieve rapid synchronous rotation preparatory to a downshift, clutch control via operator 30, and ratio shifting via transmission operator 34. The central processing unit also sends command output signals to the display 2 to be described in greater detail below. The semi-automatic transmission system 10 additionally comprises a usual foot operated manual clutch control 3 intended for use only for start from rest and/or low speed creeping maneuvering situations. The semi-automatic mechanical transmission system 10 also includes sources of electric and/or pneumatic power (not illustrated).

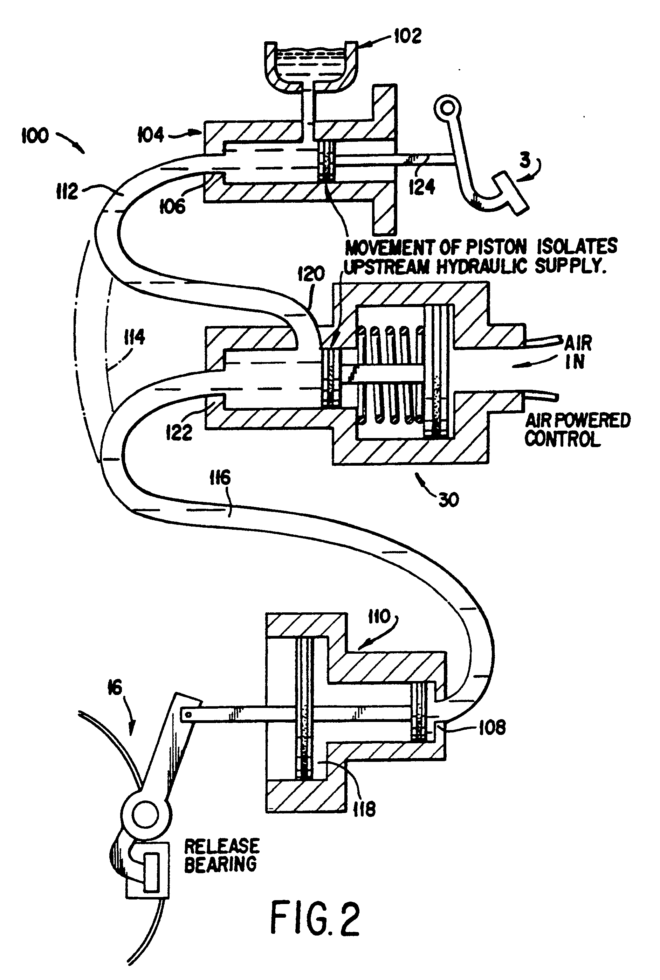

Figure 2 illustrates the clutch control system 100 of the present invention as utilized with the SAMT system 10 illustrated in Figure 1.

The clutch actuation system 100 makes use of the existing standard manual clutch control components predesigned into a particular vehicle by the vehicle builder. This minimizes component and installation engineering costs. The standard manual clutch control system includes an hydraulic reservoir 102 supplying hydraulic fluid to a master cylinder 104 operated by the clutch pedal 3. The master cylinder output 106 is normally connected to the input 108 of a clutch actuator 110 by fluid lines 112, 114 and 116. The clutch actuator typically includes a servo-assist mechanism 118 to minimize force required at the pedal 3, and use of the existing assist mechanism minimizes the size of required AMT/SAMT clutch actuation devices.

All of the existing components are, of course, available to and designed into existing vehicles making the use of an AMT/SAMT easier and less costly to a vehicle manufacturer.

To provide automatic clutch operation, an automatic clutch operator 30 is interposed between the standard master cylinder 104 and the standard clutch actuator 110.

The actuator 30 is controlled directly or indirectly by command output signals from CPU 38 and includes an inlet 120 connected to the reservoir 102 by conduit 112 and an outlet 122 connected to the standard clutch actuator 110 by conduit 116. As is shown, upon actuation of either the master cylinder 104 or the automatic actuator 30, fluid connections to upstream hydraulic connections are closed.

In the illustrated three pedal system, the clutch may be operated by either the manual pedal 3 or the CPU 38. In a two-pedal system not embodying the invention, the reservoir 102 is connected directly to conduit 112, and the pedal 3 and master cylinder 104 may be eliminated from system 100. Alternatively, in a two pedal system, conduits 112 and 116 could be directly fluidly connected (as by conduit 114) and the actuator 30 could act on the linkage 124 normally manipulated by the clutch pedal 3.

## Claims

1. A manual clutch actuator system (100) of the type utilizing a fluid reservoir (102) fluidly connected to a clutch actuator (110) which serves to throw out a release bearing (16), with a manually operable master cylinder (104) fluidly interposed between said reservoir (102) and said actuator (110), said system characterized by : for an automatic or semi-automatic clutch actuation facility, an operator (30) connected in series between said master cylinder (104) and said clutch actuator (110), said operator (30) having an inlet (120) fluidly connected to the outlet (106) of said master cylinder and an outlet (122) fluidly connected to the inlet (108) of said clutch actuator (110), said master cylinder (104) thereby being effective in response to said manual actuation to pressurize fluid at said inlet (120), wherein said automatic clutch actuator operator (30) is biased normally to provide substantially unobstructed fluid communication between said inlet (120) and said outlet (122) of the operator (30), but responsive to command signals from an automatic or semi-automatic transmission control (38) to overcome the bias of the operator (30) and thereby also to pressurize said fluid at said outlet (122) and to block said inlet (120) ; with consequent release actuation of said clutch whether or not said master cylinder (104) is manually operated.

## Ansprüche

1. Körperlich (manuell) zu betätigendes Kupplungsbetätigungssystem (100) der Bauart mit einem Fluidvorratsbehälter (102), der strömungsmäßig mit einem Kupplungsstellantrieb (111) verbunden ist, der dazu dient, ein Drucklager (16) auszurücken ; mit einem körperlich (manuell) zu betätigenden Kupplungshauptzylinder (104) der strömungsmäßig zwischen dem Vorratsbehälter (102) und dem Stellantrieb (110) angeordnet ist, dadurch gekennzeichnet, daß zum Zweck einer automatischen oder halbautomatischen Kupplungsbetätigung eine Betätigungseinrichtung (30) in Serie zwischen dem Kupplungshauptzylinder (104) und dem Kupplungsstellantrieb (110) eingefügt ist, daß die Betätigungseinrichtung (30) einen strömungsmäßig an den Auslaß (106) des Kupplungshauptzylinders angeschlossenen Einlaß (120) sowie einen strömungsmäßig an den Einlaß (108) des Kupplungsstellantriebes (110) angeschlossenen Auslaß (122) aufweist, daß der Kupplungshauptzylinder (104) auf diese Weise in Abhängigkeit von der körperlichen Betätigung arbeitet, um das Fluid an dem Einlaß (120) unter Druck zu setzen, wobei die Betätigungseinrichtung (30) zum automatischen Kuppeln in die Ruhestellung vorgespannt ist, um eine im wesentlichen unbehinderte Strömungsverbindung zwischen dem Einlaß (120) und dem Auslaß (122) der Betätigungseinrichtung (30) zu schaffen, jedoch in Abhängigkeit von Steuersignalen eine automatische oder halbautomatische Getriebesteuerung (38) im Sinne des Überwindens der Vorspannung der Betätigungseinrichtung (30) arbeitet, um dadurch ebenfalls das Fluid an dem Auslaß (122) unter Druck zu setzen sowie den Einlaß (120) abzusperren, was zum Auskuppeln der Kupplung führt, unabhängig davon, ob der Hauptzylinder (104) manuell betätigt ist.

## Revendications

1. Un système d'actionnement manuel d'embrayage (100) du type utilisant un réservoir de fluide (102) relié fluidiquement à un organe d'actionnement d'embrayage (110) qui sert à déclencher un palier de libération (16), un maître-cylindre (104) manoeuvrable manuellement étant interposé fluidiquement entre ledit réservoir (102) et ledit organe d'actionnement (110), ledit système étant caractérisé en ce que, pour une possibilité d'actionnement automatique ou semi-automatique d'embrayage, un opérateur (30) est relié en série entre ledit maître-cylindre (104) et ledit organe d'actionnement d'embrayage (110), ledit opérateur (30) comportant une entrée (120) reliée fluidiquement à la sortie (106) dudit maître-cylindre et une sortie (122) reliée fluidiquement à l'entrée (108) dudit organe d'actionnement d'embrayage (110), ledit maître-cylindre (104) agissant ainsi en réponse audit actionnement manuel pour mettre en pression le fluide à ladite entrée (120), système dans lequel ledit opérateur d'actionnement automatique d'embrayage (30) est sollicité normalement pour établir une communication fluidique sensiblement sans obstruction entre ladite entrée (120) et ladite sortie (122) de l'opérateur (30), mais répondant à des signaux de commande provenant d'une commande de transmission automatique ou semi-automatique (38) pour contrebalancer la sollicitation exercée sur l'opérateur (30) et pour mettre ainsi également en pression ledit fluide à ladite sortie (122) et pour fermer ladite entrée (120), avec pour conséquence un actionnement de libération dudit embrayage, que ledit maître-cylindre (104) soit ou non manoeuvré manuellement.

FIG.1

MOVEMENT OF PISTON ISOLATES
UPSTREAM HYDRAULIC SUPPLY.

AIR
IN

AIR POWERED
CONTROL

RELEASE
BEARING

FIG.2